# EUROPÄISCHE PATENTSCHRIFT

(11) **EP 1 169 214 B1**
(45) Veröffentlichungstag und Bekanntmachung des Hinweises auf die Patenterteilung: **17.12.2003**
(21) Anmeldenummer: 00914000.5
(22) Anmeldetag: 05.04.2000
(51) Int. Cl.: B62J 6/06

(54) **KOMBINIERTE BREMS- UND STROMERZEUGUNGSVORRICHTUNG FÜR FAHRRÄDER**
COMBINED BRAKING AND CURRENT GENERATING DEVICE FOR BICYCLES
DISPOSITIF MIXTE DE FREINAGE ET DE GENERATION DE COURANT DESTINE A DES BICYCLETTES

(30) Priorität: 05.04.1999 DE 19915186
(43) Veröffentlichungstag der Anmeldung: 09.01.2002
(73) Patentinhaber: Kläui, Werner, 8575 Bürglen (CH)
(72) Erfinder: Kläui, Werner, 8575 Bürglen (CH)
(74) Vertreter: patentanwälte breiter + wiedmer ag
(86) Internationale Anmeldenummer: CH0000200
(87) Internationale Veröffentlichungsnummer: WO00059769

(56) Entgegenhaltungen:
- BE-A- 906 142
- DE-U- 29 822 343
- FR-A- 2 293 354
- FR-A- 2 653 612
- US-A- 5 590 946

## Beschreibung

Die Erfindung bezieht sich auf eine Brems- und Stromerzeugungsvorrichtung für Fahrräder mit wenigstens einem Stromverbraucher, insbesondere einer Beleuchtung und/oder wenigstens einer Batterie, weiche Stromerzeugungsvorrichtung eine mit Permanentmagneten bestückte Felge als Rotor und auf einem Träger seitlich der Felge angeordnete elektrische Wickelspulen als Stator umfasst, wobei die auf einer oder beiden Seiten entlang der ganzen Felge wenigstens eines Rades angeordneten Permanentmagneten der Felge und die mit dem Krümmungsradius der Felge entsprechend längslaufend nahe nebeneinander angeordneten Wickelspulen des Trägers bei entsprechender Stellung des Rotors deckungsgleich angeordnet sind. Die Erfindung erstreckt sich auch auf eine inverse Vorrichtung, welche eine mit Wickelspulen bestückte Felge und auf einem Träger angeordnete Permanentmagneten aufweist.

Mit dem Begriff "Fahrräder" werden hier und im folgenden alle durch menschliche Körperkraft angetriebenen Fahrzeuge mit zwei bis vier Rädern umfasst. Die Bremssysteme an sich werden als bekannt vorausgesetzt.

Weiter ist bekannt, dass die Stromerzeugung auf nicht chemischem Weg über Permanent- bzw. Dauermagnete und Wickelspulen, insbesondere mit Kupferdrähten, erfolgt. Dieses Prinzip wird auch bei den herkömmlichen Dynamos für Fahrräder verwendet. Diese haben jedoch einen schlechten Wirkungsgrad, speziell bei Schmutz, Wasser und Schnee wird die mechanische Kraftübertragung durch Schlupf erheblich beeinträchtigt, mit andern Worten gleitet der Dynamo wenigstens zeitweise auf dem Pneu. Trotz zahlreicher Versuche, die Stromversorgung von Fahrrädern auf einfachere, sicherere und wirkungsvollere Art und Weise zu erreichen, hat sich bisher in der Praxis kein anderes, dem Praktiker bekanntes System nachhaltig durchsetzen können.

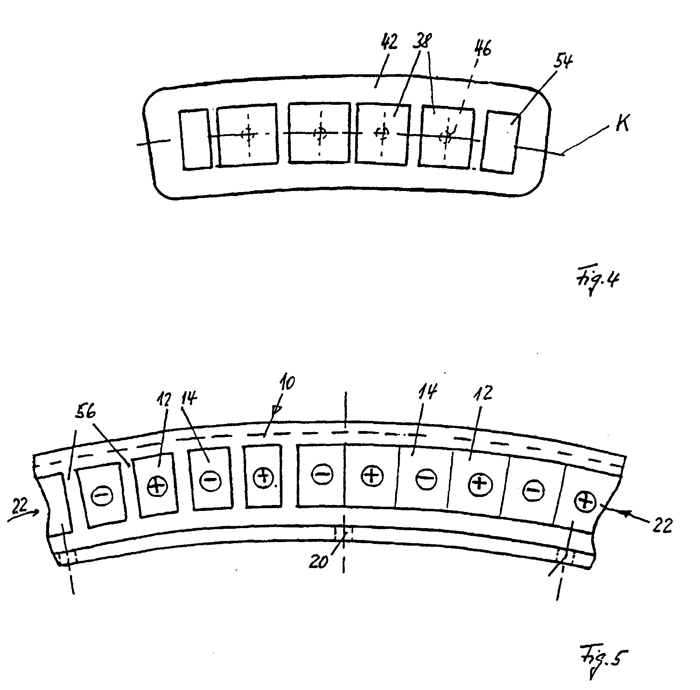

In der belgischen Patentschrift 906142 wird ein Generator für die Stromerzeugung auf Fahrrädern beschrieben. In Fig. 3, 4 ist eine Fahrradgabel mit einer Lampe und einem teilweise gezeichneten Rad dargestellt. Auf der Felge des Rades ist, in Fig. 3 ersichtlich, ein Magnetring 11 mit einem Magneten dargestellt. Der Abstand zwischen Magnetring und Spulen wird mit einem Distanzregler mit Feineinstellmöglichkeit justiert. Mit dieser Vorrichtung wird der für die Beleuchtung notwendige Strom ohne Dynamo erzeugt.

In der neueren DE,U1 29822343 wird ein High-Tech-Stromerzeugungs- und Brems-System für Fahrräder offenbart, welches darauf beruht, dass mehrere einzelne Dauermagneten an der Peripherie des Rads mit alternierenden Polaritäten angeordnet sind. In der Nähe von mehreren elektromagnetischen Spulen rotieren diese Dauermagneten und induzieren so elektrische Energie. Die Spulen können auch zum Bremsen benutzt werden, eine Berührungs-Sensorleiste reguliert die Leistung des Bremseffekts. Trotz einer zusätzlichen elektronischen Hilfsbremse hat dieses High-Tech-System in der Praxis nicht Fuss fassen können.

Die FR,A1 2293354 beschreibt die Stromerzeugung im Bereich eines Gummireifens, insbesondere eines Fahrrades. Der Reifen bewirkt einerseits eine elastische Abfederung und erzeugt andererseits als Rotor dank seiner Bewegung gegenüber einem Stator den elektrischen Strom. Die Permanentmagnete sind in den Pneu integriert, die Kerne der Wickelspulen sind als Stator den Aussenformen des Pneus angepasst und in kleinem Abstand am Fahrradrahmen fixiert. Damit wird insbesondere ein hoher Wirkungsgrad angestrebt, die Pneuabnützung vermindert und ein lautloser Betrieb gewährleistet.

Der Erfinder hat sich die Aufgabe gestellt, eine Brems- und Stromerzeugungsvorrichtung der eingangs genannten Art zu schaffen, welche die offensichtlichen Nachteile eines Dynamos beseitigt, im übrigen jedoch möglichst nahe beim Konstruktions- und Funktionsprinzip herkömmlicher Fahrräder bleibt. Die Stromversorgung des Fahrrads soll einfach, kraftsparend und reibungslos erfolgen, ohne dass die Wirtschaftlichkeit des Fahrrads beeinträchtigt wird.

Die Aufgabe wird erfindungsgemäss dadurch gelöst, dass in einer kombinierten Vorrichtung eine auswechselbare Spuleneinheit aus einer magnetisch gut leitenden Trägerplatte mit wenigstens drei rechtwinklig abkragenden Wickelspulen in eine Bremsbacke der Bremsvorrichtung eingebaut ist, welche nach dem U-Kern-Prinzip nebeneinander angeordneten Wickelspulen ein optimal wechselndes N-S/S-N Magnetfeld von jeder Spule zur/zu den Nachbarspule/n erzeugen, wobei die Spuleneinheit auf der von der Trägerplatte abgewandten Seite wenigstens teilweise mit einem mechanisch wirksamen Bremsbelag versehen ist. Spezielle und weiterbildende Ausführungsformen der Vorrichtung sind Gegenstand von abhängigen Ansprüchen.

Erfindungsgemäss sind eine konventionelle Bremsvorrichtung mit auf der Felge andrückbaren Bremsbacken und eine Stromerzeugungsvorrichtung in einer neuen kombinierten Vorrichtung mit auswechselbarer Spuleneinheit vereinigt. Beim normalen Dahinfahren mit dem Fahrrad haben die Bremsbacken einen einstellbaren Abstand von der Felge mit den Permanentmagneten. Die Bremsbacken sollen einerseits bei auftretenden Unwuchtstellen nicht schleifen, jedoch andererseits für die Stromerzeugung einen optimalen Wirkungsgrad erzielen.

Beim Andrücken der Bremsen entsteht nicht nur ein mechanischer Reibwiderstand, zusätzlich wird wegen des geringeren Abstands von Permanentmagneten und Spulen bzw. Spulenkernen eine erhöhte Stromproduktion erzielt, was sich in Form einer die mechanische Bremswirkung verstärkenden elektronischen Bremse auswirkt.

Der nicht durch die Fahrradbeleuchtung gebrauchte Strom kann in wenigstens einer aufladbaren Batterie gespeichert werden, welche beispielsweise im Fahrradrahmen plaziert sind. Schliesslich können auch Zusatzgeräte, wie ein Radio, mit elektrischem Strom gespeist werden.

Nach dem erfindungswesentlichen U-Kern-Prinzip fliesst das Magnetfeld von den Permanentmagneten alternierender Polarität auf der Felge über einen Spulenkern zur ebenfalls magnetisch gut leitenden Trägerplatte, teilt sich dort in zwei in entgegengesetzter Richtung durch die Trägerplatte fliessende Magnetfelder auf und fliesst über die beiden benachbarten Spulenkerne zurück zu den beiden gegenpoligen Permanentmagneten auf der Felge.

Die Permanentmagnete alternierender Polarität sind regelmässig entlang des gesamten Umfangs der Felge verteilt, und zwar in deren seitlichen Bereichen. Die in der Regel 0,5 bis 2 cm langen und 1 bis 4 mm dicken Permanentmagnete können in geringem oder grösserem Abstand angeordnet werden, welcher entlang des Felgenumfangs jedoch nicht grösser sein sollte als der einzelne Permanentmagnet selbst lang ist. Permanentmagnete bestehen aus magnetischem oder magnetisierbarem Material.

Nach einer besonders vorteilhaften Ausführungsform der Erfindung sind die Permanentmagneten bezüglich des Felgenumfangs in Abstand angeordnet und dazwischen mit einer magnetisch gut leitende Beschichtung angeordnet, welche beispielsweise aus Weicheisen besteht. Diese sogenannten Zwischenkeme aus magnetisch gut leitendem Material haben auf der Innenseite der Felge vorteilhaft eine radiale Einbuchtung in radialer Richtung. Diese magnetisch gut leitende Schicht hat in der Praxis die gleiche Dicke und Breite wie die Permanentmagnete. Die Länge der magnetisch gut leitenden Schicht kann gleich oder unterschiedlich von derjenigen der Permanentmagnete sein. Ein wichtiger Vorteil dieser Zwischenkeme ist, dass das Magnetfeld der der Länge nach angeordneten Permanentmagnete im rechten Winkel zur Felgenebene umleitet und so das Magnetfeld optimal an die Spulenkerne übergibt.

Auf der den magnetischen Fluss gut leitenden Trägerplatte sind vorzugsweise Spulenkerne für die Spulenwicklungen angeordnet, welche mit der Trägerplatte lösbar oder unlösbar verbunden sind. Trägerplatte und Spulenkerne können auch einstückig ausgebildet, also angeformt, sein.

Bei den äussersten der wenigstens drei Spulenkerne, welche im wesentlichen linear angeordnet sind, kann die Spulenwicklung fehlen, falls diese Sputenkerne magnetisch gut leitend sind. Derart wird gewährleistet, dass bei allen Wickelsputen das U-Kern-Prinzip gewährleistet ist. Falls alle Wickelkerne eine Spulenwicklung haben, was durchaus auch der Fall sein kann, spielt bei den beiden äussersten Spulen das U-Kern-Prinzip nur noch hälftig.

Die vorstehend erwähnte Trägerplatte besteht, wie die magnetisch gut leitenden Wickelkerne, zweckmässig aus Weicheisen. Die Trägerplatte ist, mit oder ohne Spulenkerne, vorzugsweise auswechselbar.

Ein Fahrrad muss allwettertauglich sein, weshalb die Spuleneinheit, mit Wikkelspulen, Trägerplatte und in der Regel Wickelkernen, bevorzugt wasserdicht umhüllt ist. Dies erfolgt durch den Bremsbelag, welcher auch der Magnetfeldübertragung und dem Spulenschutz dient und einen weiteren, die Einheit völlig umhüllenden Spulenschutz. Die ganze Spuleneinheit ist, wie erwähnt, in das Bremssystem von Fahrrädern integrierbar, auch von konventionellen Fahrrädern als Nachrüstung.

Der abriebfeste Bremsbelag umfasst im Bereich der Wickelspule bzw. des Wickelkerns vorzugsweise eine zentrale, magnetisch gut leitende Übertragungsplatte, was zu einer höheren Induktion zur Stromerzeugung in den Wikkelspulen führt.

Eine Weiterentwicklung der Erfindung besteht darin, dass der Bremsbelag der Spuleneinheit mit einer auswechselbaren Verschleissschutzplatte versehen ist, welche vorzugsweise im Bereich der Spulenkerne eine weitere magnetisch gut leitende Übertragungsplatte aufweist.

Bezüglich ihres Querschnitts sind magnetisch leitende und magnetisch nicht leitende Spulenkerne bevorzugt oval oder rechteckig ausgebildet, wodurch die Kernoberfläche mit den daraufliegenden Drahtwicklungen grösser ist als bei runden Kernen, welche letztere jedoch selbstverständlich nicht ausgeschlossen sind. In diesem Zusammenhang ist zu betonen, dass der Abstand der Wickelkerne bzw. der Wicklungspulen so gewählt wird, dass die Zwischenräume von Spule zu Spule möglichst gering sind, wodurch sich der Wirkungsgrad erhöht, indem sich die Spulen gegenseitig besser induzieren.

Eine gute magnetische Leitfähigkeit kann nicht nur mit dem üblich verwendeten Weicheisen erreicht werden, es können auch magnetfeldleitende Partikel in eine Matrix, beispielsweise aus Kunststoff, eingearbeitet werden. Dies kann in regelmässiger Verteilung oder mit einem Konzentrationsgradienten erfolgen. Bei den Bremsbelägen sind überdies bremstechnisch optimale Zusammensetzungen anzustreben, wobei auch bisher übliche Bremsbeläge als Matrix dienen können.

In einer Spuleneinheit können die Spulenkerne, die Abschlusskerne ohne Wicklungspulen sind im Begriff Spulenkerne stets inbegriffen, gegenüber den Drahtspulen in Längsrichtung versetzt ausgebildet sein, insbesondere leicht erhöht. Dadurch wird ihnen eine bessere Bremskraftübertragung und ein besserer Halt gegeben. Vertiefungen in den Wickelkernen bewirken grundsätzlich dasselbe.

Die Felgen des Fahrrads bestehen in der Regel aus einem stranggepressten Aluminiumprofil, welches abgelängt, kreisrund gebogen und zusammengesteckt wird. Grundsätzlich können die Felgen jedoch auch aus Kunststoff bestehen, ebenfalls aus einem stranggepressten Profil oder im Spritzgussverfahren hergestellt. Die Felgen sind querschnittlich im wesentlichen U- oder V-förmig ausgebildet, auch mit einem innenliegenden Hohlprofil. Die in radialer Richtung offenen Felgenprofile haben auf der Innenseite jeden Aussenprofils wenigstens eine Verhakung zur Aufnahme der Pneuwulste. Weiter haben sie, was mit Blick auf die vorliegende Erfindung von wesentlicher Bedeutung ist, im seitlichen Aussenbereich, auch in einem Hohlraum. dem Wirkungsbereich der Felgenbremsen, über den ganzen Umfang regelmässig verteilte Permanentmagneten. In der Regel sind beide Aussenbereiche einer Felge mit Permanentmagneten bestückt, im Prinzip können diese jedoch auch nur auf einer Seite ausgebildet sein.

Die wenigstens seitlich aussenliegenden Permanentmagneten sind in eine entsprechend umlaufende Nut eingebracht und wenn nötig darin befestigt, insbesondere durch Kleben, Löten oder Schweissen. Weiter können Permanentmagnete auf die entsprechenden Felgenaussenseiten mit bekannten chemischen oder physikalischen Abscheidungsverfahren aufgebracht werden, welche materialspezifisch sind. In sich stabile Permanentmagnetschichten können auch auf die Felge auf- oder in die Felge hineingesteckt werden, wenn die Profile entsprechend ausgebildet sind. Schliesslich kann die Felge aus einem Verbundmaterial mit im Bremsbereich aussenliegender Permanentmagnetschicht hergestellt sein.

Nach allen vorstehend beschriebenen Ausführungsformen der Erfindung sind die Permanentmagneten auf oder im äussersten Seitenbereich in der Felge angeordnet, die auswechselbare Spuleneinheit ist in die Bremsvorrichtung eingebaut. Der Schutzbereich der vorliegenden Erfindung erstreckt sich auch auf eine inverse Vorrichtung, nämlich eine Felge mit Wickelspulen und eine in das Bremssystem integrierte auswechselbare Permanentmagneteneinheit. Die abhängigen Patentansprüche, die Beschreibung der bevorzugten Ausführungsformen, die Zeichnungen und deren Beschreibung beziehen sich sinngemäss auch auf diese inverse Lösung, so weit sie sich nicht schon konkret darauf abstützen die nachfolgende Fig. 27 und deren Beschreibung.

Die Vorteile der vorliegenden Erfindung können wie folgt kurz zusammengefasst werden:
- Die bisher stets getrennt angeordneten Brems- und Stromerzeugungssysteme für Fahrräder können in einer kombinierten Brems- und Stromerzeugungsvorrichtung für Fahrräder zusammengefasst werden.
- Auch bei Unwucht oder unzentriertem Lauf des Rades kann ein maximaler Wirkungsgrad erzielt werden.
- Die Leistungsfähigkeit ist durch die Anzahl von Wickelspulen im Bremsschuh nach Bedarf einstellbar.
- Eine auswechselbare Spuleneinheit gewährleistet einen sichereren Betrieb und geringere Betriebskosten.
- Eine kombinierte Brems- und Stromerzeugungsvorrichtung kann problemlos und kostengünstig in bestehende Fahrräder eingebaut werden.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 eine aufgeschnittene Ansicht einer Brems- und Stromerzeugungsvorrichtung für Fahrräder;
- Fig. 2 die eine Hälfte einer Vorrichtung gemäss Fig. 1 mit auswechselbarer Verschleissschutzplatte,
- Fig. 3 Schnitte A-A und B-B gemäss Fig. 1,
- Fig. 4 einen Schnitt E-E gemäss Fig. 2,
- Fig. 5 einen Schnitt C-C gemäss Fig. 1,
- Fig. 6 Erklärung des U-Kern-Prinzips mit magnetisch leitenden Spulenkernen,
- Fig. 7 Erklärung gemäss Fig. 6 mit magnetisch nicht leitenden Spulenkernen,
- Fig. 8 eine Ansicht von zwei mit Permanentmagnetschichten und dazwischenliegenden Weicheisenschichten bestückten Felgensegmenten,
- Fig. 9 eine Draufsicht auf Fig. 8,
- Fig. 10 eine Ansicht von zwei mit Permanentmagnetschichten und magnetisch nicht leitenden Zwischenschichten bestückten Felgensegmenten,
- Fig. 11-22 Varianten von Felgenprofilen mit aufgebrachten oder eingearbeiteten Permanentmagnetschichten,
- Fig. 23 ein an sich bekanntes Bremssystem mit einer Brems- und Stromerzeugungsvorrichtung,
- Fig. 24 eine Variante von Fig. 23,
- Fig. 25 eine Teilansicht eines Bremssystems mit Grob- und Feineinstellung im Griffbereich,
- Fig. 26 in einem Fahrradrahmen angeordnete Batterien, und
- Fig. 27 eine Nabe mit Nabenlager bei auf der Felge montierten Wickelspulen.

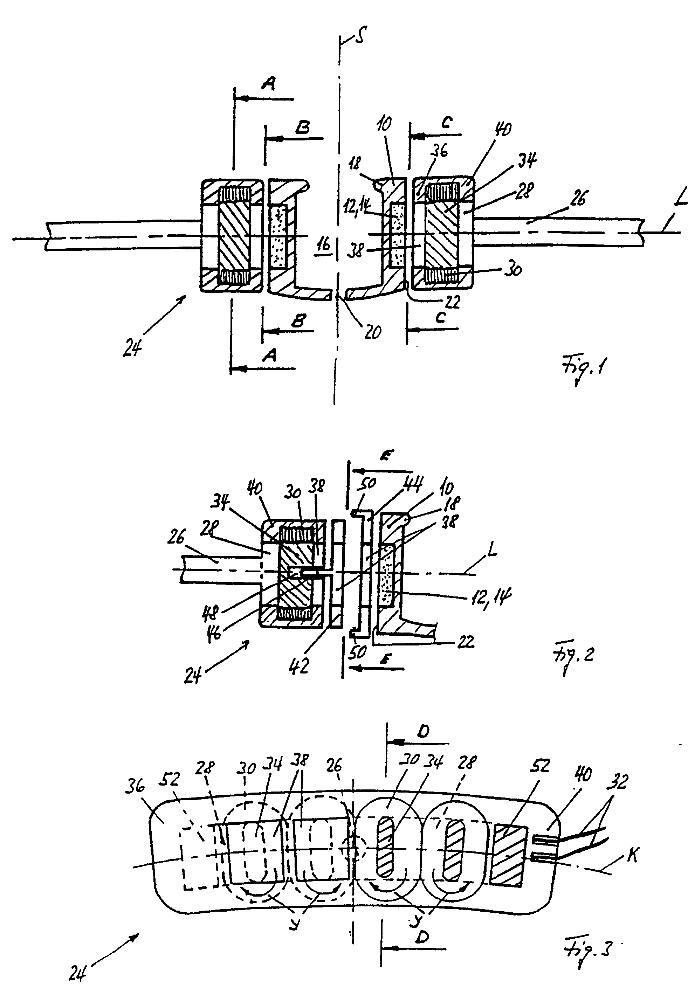

Fig. 1 zeigt den Kern einer Brems- und Stromerzeugungsvorrichtung für Fahrräder, welche eine Symmetrieebene S hat. Eine Felge 10, im vorliegenden Fall eine Aluminiumfelge, ist im Querschnitt dargestellt. Die beiden Aussenseiten der Felge 10 haben je eine umlaufende Nut, in welche nachfolgend im Detail gezeigte Permanentmagnetschichten 12, 14 in Plättchenform eingeklebt sind. Die Permanentmagnetschichten 12, 14 bestehen aus magnetischem oder magnetisierbarem Material. Ein Innenraum 16 der Felge 10 dient der Aufnahme von nicht dargestellten Pneuwulsten, welche nach dem Aufpumpen eines ebenfalls. nicht dargestellten Pneus durch eine Verhakung 18 in Form von Rastnasen arretiert werden. Innenseitig sind aus der Felge Radspeichenlöcher 20 ausgespart.

In einem geringen Abstand von wenigen Millimetern von den Bremsflächen 22 der Felge entfernt sind beidseits Spuleneinheiten 24 angeordnet, welche in Längsrichtung L von deren Träger 26 verschiebbar sind.

Die Spuleneinheiten 24 umfassen im wesentlichen eine magnetisch gut leitende Trägerplatte 28, wenigstens drei Wickelspulen 30 mit Kupferdrähten und wenigstens einen Spulenkern 34.

In Richtung der Felge 10 bzw. der Permanentmagnetschichten 12, 14 hat die Spuleneinheit 24 einen Bremsbelag 36, welcher im Bereich der Wickelspulen eine zentrale, magnetisch gut leitende Übertragungsplatte 38 aufweist.

Der Bremsbelag 36 mit der Übertragungsplatte 38 ist ergänzt durch einen Spulenschutz 40, wodurch die Spuleneinheit 24 wasserdicht umhüllt ist.

Fig. 2 zeigt die linke Hälfte von Fig. 1 mit einer zusätzlichen austauschbaren Brems-, Magnetfeldübertragungs- und Spulenschutzplatte, im folgenden Verschleissschutzplatte 42, 44 genannt. Nach einer ersten Variante wird die Verschleissschutzplatte 42 mit einem abkragenden Zentraldorn 46 in eine axiale Sackbohrung 48 des Spulenkerns 34 aufgesteckt. Nach einer zweiten Variante wird die Verschleissschutzplatte 44 mit einer wenigstens teilweise peripher umlaufenden Zentrierungslippe 50 auf die Spuleneinheit 24 aufgesteckt. Beide Verschleissschutzplatten 42, 44 haben eine zentrale, den Bereich einer Wikkelspule 30 oder wenigstens eines Spulenkerns 34 abdeckende Übertragungsplatte 38, welche aus magnetisch gut leitendem Material besteht.

Eine aufgeschnittene Ansicht einer Spuleneinheit 24 ist in Fig. 3 dargestellt. Die Wickelspulen 30 mit den Spulenkernen 34 sind eng aneinander liegend praktisch linear angeordnet. Die Krümmungslinie K entspricht dem Verlauf der Felge 10 (Fig.1, 2) mit dem Radius des Rades. Die beiden endständigen Spulenkerne haben keine Wickelspule, sie werden Abschlusskerne 52 genannt. Die Wickelrichtung der Wickelspule aus isolierten Kupferdrähten ist mit y angegeben, sie ist bezüglich einer oder beider Nachbarspulen gegenläufig, also alternierend. Die aus der Spuleneinheit 24 austretenden Kupferdrähte 32 führen zum nicht dargestellten Stromverbraucher.

In der linken Hälfte der Spuleneinheit 34 sind die magnetisch gut leitenden Übertragungsplatten 38 eingezeichnet, welche in den Bremsbelag 36 integriert sind. Die Wickelspulen 30 und Spulenkerne 34 sind hinter dem Bremsbelag 36 angeordnet. Diese Situation entspricht dem Schnitt B-B von Fig. 1.

Auf der rechten Seite ist die Situation des Schnitts A-A von Fig. 1 dargestellt. Die stark längsovalen Spulenkerne 34 haben eine andere geometrische Querschnittsform als die nicht umwickelten Abschlusskerne 52. Die die Spulenkerne 34 umgebenden Wickelspulen 30 sind eng aneinanderliegend, so können sich die Spulen gegenseitig induzieren.

Fig. 4 ist eine Ansicht einer Verschleissschutzplatte 42 gemäss Schnitt E-E (Fig. 2) mit integrierten magnetisch gut leitenden übertragungsplatten 38 dargestellt. Deren Zentraldorne 46 sind gestrichelt angedeutet. Zwei endständige Tiefenprägungen 54 dienen der Aufnahme der leicht erhöhten Kerne 34, 52 (Fig. 3). Die Krümmungslinie K deutet wiederum den Verlauf der Felge 10 (Fig. 1, 2) an.

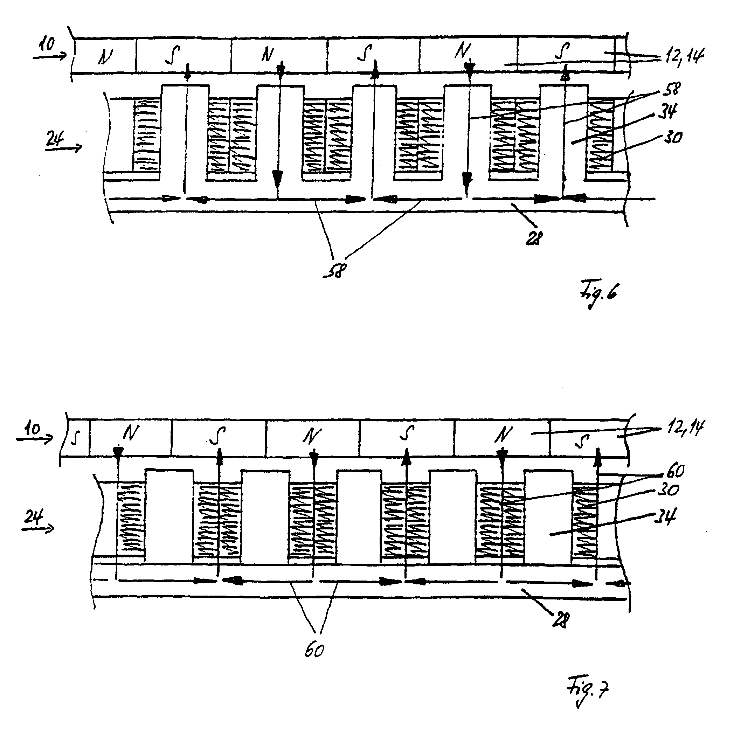

In Fig. 5 ist ein Segment der Felge 10 mit einem Magnetisierungsbeispiel dargestellt. Die alternierend angeordneten Permanentmagnetschichten 12, 14 sind entsprechend der Polarisation mit + und - bezeichnet. Die Oberfläche der Permanentmagnetschichten 12, 14 ist gleichzeitig Teil der Bremsfläche 22 (Fig. 1, 2) der Felge 10.

In der rechten Hälfte von Fig. 5 sind die Permanentmagnetschichten 12, 14 aneinanderstossend angeordnet. In der Variante auf der linken Seite sind die Permanentmagnetschichten 12, 14 mit Zwischenstegen 56 der Felge 10 in Abstand angeordnet. Dadurch kann der elektrische Wirkungsgrad und/oder die Bremswirkung optimiert werden. Mit Blick auf die Bremsfläche sind die Permanentmagnetschichten 12, 14 und die Zwischenstege 56 oberflächenbündig angeordnet.

Auf der Innenseite der Felge 10 sind die Radspeichenlöcher 20 erkennbar.

Anhand von Fig. 6 wird das U-Kern-Prinzip mit magnetisch gut leitenden Spulenkernen 34 gezeigt, welche im vorliegenden Fall aus Weicheisen bestehen und mit der Trägerplatte 28 einstückig ausgebildet sind. Der mit Pfeilen 58 dargestellte Magnetfluss führt bei der dargestellten deckungsgleichen Position von Permanentmagnetschichten 12, 14 auf der Felge 10 (Rotor) und der Spuleneinheit 24 (Stator) mit Wickelspulen 30 und Spulenkernen 34 von den mit N bezeichneten Permanentmagnetschichten über die Spulenkerne 34 auf die Trägerplatte 28. Dort teilt sich der Magnetfluss in zwei Hälften auf und fliesst etwa hälftig in entgegengesetzter Richtung bis zum nächsten Spulenkern 34. Dort vereinigen sich die aus verschiedener Richtung kommenden Magnetflüsse und fliessen über die andern Spulenkerne 34 zum mit S bezeichneten Permanentmagnetschichten. Damit ist ein U-Kem-Prinzip gegeben.

Fig. 7 unterscheidet sich von Fig. 6 dadurch, dass die Spulenkerne 34 magnetisch nicht leitend und auf der magnetisch leitenden Trägerplatte 28 befestigt sind. Der hier mit den Pfeilen 60 bezeichnete Magnetfluss fliesst nun bei entsprechender Position des Rotors durch die Wickelspulen 30 und bildet ebenfalls das U-Kern-Prinzip.

Bei einer Spuleneinheit mit magnetisch nicht leitenden Spulenkernen 34 ist die erzeugte elektrische Leistung geringer, der Wirkungsgrad jedoch höher als bei magnetisch leitenden Spulenkernen. Die magnetisch leitende Trägerplatte 28 wirkt dann als direkter Empfänger des Magnetfeldes (Pfeile 60) der Permanentmagnetschichten 12, 14 der Felge 10. Der die Wickelspulen 30 durchstreichende Magnetfluss erzeugt so den elektrischen Strom im Draht. Die Wickelspule wird sozusagen direkt zum Kern. Durch das Fehlen eines Magnetfeldabrisses, wie dies bei Wickelspulen 30 mit magnetisch leitenden Kernen 34 geschieht, entfallen Reibungsverluste, der Wirkungsgrad erhöht sich wesentlich.

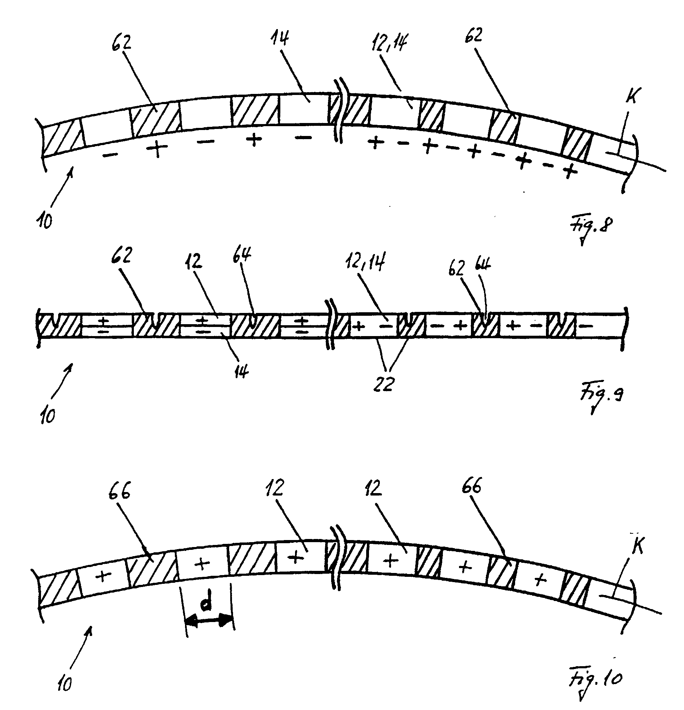

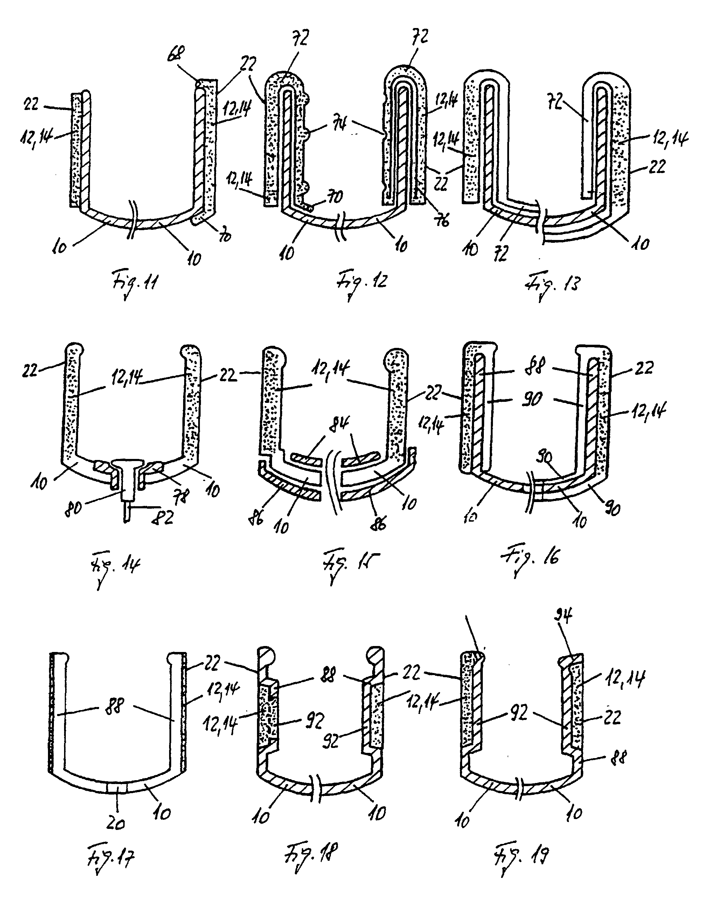

In den Fig. 8, 9 ist ein Segment einer Felge 10 dargestellt, welches in Abstand angeordnete Permanentmagnetschichten 12, 14 gleicher oder unterschiedlicher Polarität hat. Zwischen diesen Permanentmagnetschichten 12, 14 sind oberflächenbündig magnetisch gut leitende Zwischenschichten 62 angeordnet, welche wie die Permanentmagneten als Plättchen ausgebildet oder durch physikalisch/chemische Abscheidungsverfahren auftragen sein können. Es hat sich gezeigt, dass insbesondere Zwischenschichten 62 aus Weicheisen den Wirkungsgrad erhöhen. Überdies können gegenüber den teuren Permanentmagnetschichten durch die Einlage von Zwischenschichten 62 aus billigem Weicheisen die Kosten bedeutend gesenkt werden.

Auf der linken Seite von Fig. 8, 9 sind Permanentmagnetschichten 12, 14 unterschiedlicher Polarität auf der Vorder- und Rückseite ausgebildet. Die Permanentmagnetschichten 14 mit negativer Polarität bilden zusammen mit den Zwischenschichten 62 die Bremsfläche 22 der Felge 10. Auf der von der Bremsfläche 22 abgewandten Seite weisen die Zwischenschichten 62 je eine Einbuchtung 64 auf, welche in radialer Richtung verläuft. Dadurch kann die Magnetfeldumleitung durch die Zwischenschichten 62 weiter erhöht werden. Die Länge der Zwischenschichten 62 auf der linken und rechten Seite von Fig. 8, 9 ist unterschiedlich, sie kann wie die Länge der Permanentmagnetschichten 12, 14 optimalisiert werden, je nach den vorgegebenen Zielen.

Auf der rechten Seite von Fig. 8, 9 sind die Permanentmagnetschichten 12, 14 so magnetisiert, dass sie auf den beiden an die benachbarten Zwischenschichten 62 angrenzenden Stirnseiten unterschiedliche Polarität haben. Nach den Ausführungsformen von Fig. 8, 9 wird, wie bei den übrigen gezeigten Ausführungsbeispielen, Wechselstrom erzeugt.

Nach der Ausführungsform von Fig. 10 wird ein Segment einer Felge 10 gezeigt, nach welchem pulsierender Gleichstrom erzeugt wird. Die Permanentmagnetschichten 12 mit positiver Polarität sind durch magnetisch nicht leitende Zwischenschichten 66 getrennt. Die linke und die rechte Seite von Fig. 10 unterscheiden sich durch die Länge dieser Zwischenschichten 66.

In Fig. 10 ist, wie in Fig. 8 und 9 der Krümmungsradius K der Felge 10 im Bereich der Permanentmagnetschichten 12, 14 angedeutet.

Eine nicht dargestellte Spuleneinheit 24, welche zusammen mit den Varianten gemäss Fig. 10 eine Brems- und Stromerzeugungsvorrichtung für Fahrräder bildet, hat auf der der Bremsfläche 22 der Felge 10 zugewandten Seite vorzugsweise endständige und/oder zwischen den Spulen angeordnete Permanentmagneten gleicher Polarität wie die Permanentmagneten 12 oder 14 auf der Felge 10. Diese Dauermagneten sind über eine Zwischenlage eines magnetisch nicht leitenden Materials von der magnetisch gut leitenden Übertragungsplatte 38 getrennt. Dadurch wird erreicht, dass bei einer Unwucht oder einer ungenügenden Zentrierung des Rades die Spuleneinheiten 24 stets in Abstand von der Felge 10 bleiben.

In den Fig. 11 bis 22 werden Querschnitte durch Felgen 10 mit aufgebrachten oder eingearbeiteten Permanentmagnetschichten 12, 14 dargestellt. Mit Ausnahme der Profile 14 und 17 sind auf der linken und rechten Seite jeweils Varianten gezeigt.

Fig. 11 zeigt eine im wesentlichen U-förmige Felge 10, wobei auf der linken Aussenseite eine flache Permanentmagnetschicht 12, 14 aufgeklebt, aufgelötet oder aufgeschweisst ist. Auf der rechten Seite weist die Permanentmagnetschicht 12, 14 Profilzusätze 68, 70 auf, welche beispielsweise als Abwinkelungen, Rastnasen oder dgl. ausgebildet sind.

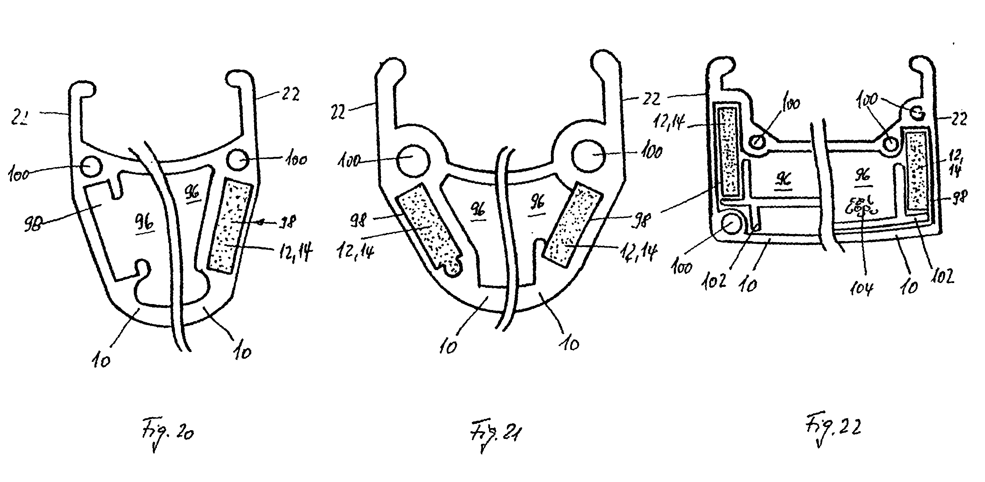

Nach Fig. 12 ist die Permanentmagnetschicht 12, 14 als Steckprofil ausgebildet, welches mindestens auf der Aussenseite magnetisch oder magnetisiert ist.

Auf der rechten Seite ist eine Stahlklammer 76 eingelegt, welche die Klemmwirkung des Steckprofils 72 erhöht. Innenseitig sind Noppen 74 oder dgl. angeformt, welche den nicht dargestellten Pneuwulst besser arretieren.

Fig.13 zeigt weitere Varianten von Steckprofilen 72, welche nur aussenseitig magnetisch oder magnetisiert sind. Die Steckprofile 72 erstrecken sich innenoder aussenseitig über die ganze Felge 10.

In Fig. 14 ist eine Felge 10 aus Kunststoff dargestellt, welche mindestens seitlich im Bereich der Bremsflächen 22 mit partikelförmigem magnetischem oder magnetisiertem Material angereichert ist und so die Permanentmagnetschicht 12, 14 bildet. Ein Locheinsatz 78 übernimmt und verteilt die von einer Speiche 82 auf eine Speichenschraube 80 übertragenen Kräfte.

In Fig. 15 sind weitere Varianten von Felgen 10 aus Kunststoff dargestellt, welche im Grundsatz Fig. 14 entsprechen. Die Kraftübertragung von hier nicht dargestellten Speichen erfolgt über eine Speichenschraube und einen oberen und/oder unteren Trägerring 84, 86. Der untere Trägerring 86 ist aussenflächenbündig abgewinkelt (linke Variante) oder aussen überstehend abgewinkelt (rechte Variante).

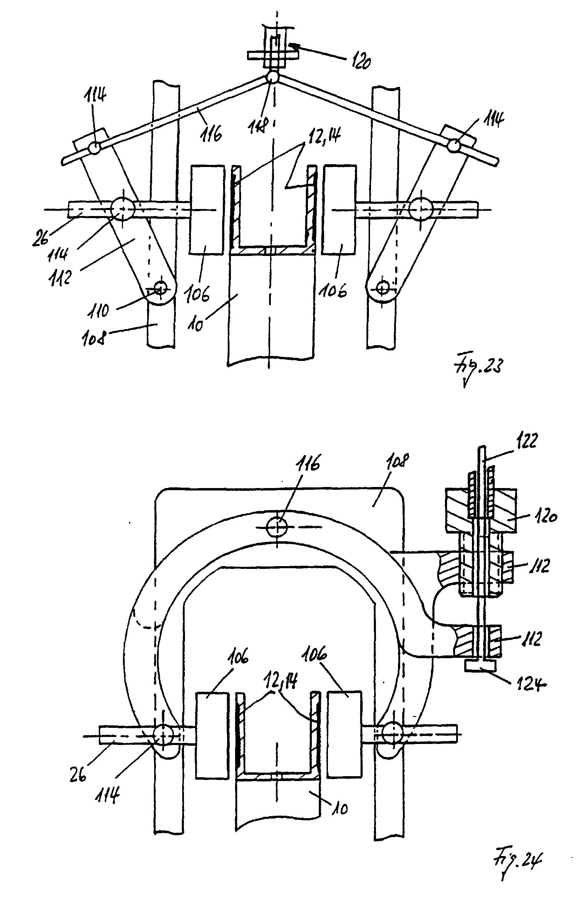

Fig. 16 zeigt auf der linken Seite einen mit permanentmagnetischem Material 12, 14 überzogenen Schenkel 88 einer Felge 10. Die Innenseite besteht ausschliesslich aus Kunststoff 90, ohne Zusatz von feinpartikularem magnetischem oder magnetisiertem Material. Auf der Aussenseite dagegen ist feinpartikulares magnetisches oder magnetisierbares Material in die Kunststoffmatrix eingebracht. Nach der auf der rechten Seite von Fig. 16 gezeigten Ausführungsform ist die gesamte Felge mit Kunststoff bedeckt, ebenfalls aussen magnetisch oder magnetisiert.

In der Ausführungsform gemäss Fig. 17 bestehen die Seitenschenkel 88 einer Aluminiumfelge 10 aus einem Verbundmetall, die Bremsflächen 22 bestehen aus einem magnetischem oder magnetisierten Metall, welches die Permanentmagnetschicht 12, 14 bildet.

Nach einer weiteren, nicht dargestellten Variante kann die ganze Felge 10 aus magnetischem oder magnetisierbarem Metall bestehen.

Auf der rechten Seite von Fig. 18 weist der Seitenschenkel 88 der Felge 10 eine umlaufende Vertiefung 92 auf, welche mit magnetischem oder magnetisierten Material 12, 14 aussenbündig gefüllt ist, als Plättchen oder aufgetragene Schicht. Nach der Ausführungsform auf der linken Seite ist die umlaufende Vertiefung 92 teilweise unterbrochen und in diesen Bereichen ebenfalls mit magnetischem oder magnetisierbarem Material gefüllt.

Die rechte Seite von Fig. 19 zeigt rechts eine Variante der rechten Seite von Fig. 18 der Seitenschenkel 88 weist im Bereich der Felgenöffnung eine nach aussen abgewinkelte Profilfahne 94 auf und bildet so den oberen Abschluss der Vertiefung 92. Auf der linken Seite von Fig. 19 ist eine oben offene Vertiefung 92 gezeigt, welche ebenfalls oberflächenbündig mit permanentmagnetischem Material 12, 14 gefüllt ist.

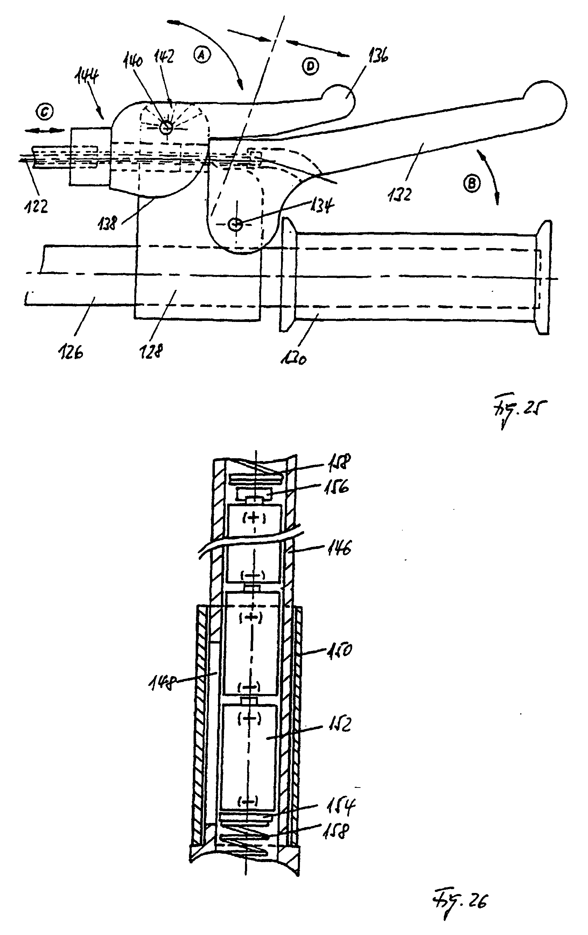

Fig. 20 zeigt zwei Varianten von Felgen 10 mit einer Hohlkammer 96. Im Seitenbereich der linken Ausführungsform ist eine stark hinterschnittene Nut ausgebildet, welche auch als weiterer Hohlraum 98 bezeichnet werden kann. In diesen Hohlraum 98 ist wenigstens ein Band aus Permanentmagnetmaterial 12, 14 eingezogen oder Permanentmagnete 12, 14 mit oder ohne Zwischenkerne 62 eingestossen.

Die rechte Ausführungsform von Fig. 20 weist einen weiteren geschlossenen Hohlraum 98 auf, in welchem das permanentmagnetische Material eingezogen oder eingestossen ist. Gegen aussen ist der Hohlraum 98 für die Permanentmagnetschicht 12, 14 möglichst dünnwandig ausgebildet, damit die Magnetfelder möglichst wenig geschwächt werden.

Die längslaufenden Bohrungen 100 dienen dem Zusammenstecken der Felgen bei deren Herstellung.

Fig. 21 zeigt zwei weitere Varianten der rechten Ausführungsform von Fig. 20. Die Felgen 10 von Fig. 20 und 21 sind im wesentlichen V-förmig ausgebildet. Nach Fig. 21 und 22 sind die Hohlräume 98 auch im Bereich der Bremsflächen 22 angeordnet statt wie gezeichnet weiter unten.

Nach den beiden Ausführungsformen von Fig. 22 wird die Permanentmagnetschicht 12, 14 durch eingeschobene Kunststoffprofile 102 gehaltert. Anstelle von oder zusätzlich zu diesen Kunststoffprofilen 102 kann die Hohlkammer 96 der Felge 10 ausgeschäumt werden, eine solche Ausschäumung 104 ist auf der rechten Seite von Fig. 22 angedeutet.

Ergänzend zu den Fig. 11 bis 22 wird noch erwähnt, dass die Permanentmagnetschichten 12, 14 an sich gemäss Fig. 5, 8, 9 oder 10 ausgestattet sind, in der Regel alternierend.

In Fig. 23 ist ein an sich bekanntes Bremssystem mit einer im Querschnitt aufgeschnittenen Felge 10 gezeigt. Auf den beiden Aussenseiten ist je eine Permanentmagnetschicht 12, 14 aufgebracht. In den beiden Bremsbacken 106 ist je eine nicht sichtbare Spuleneinheit 24 (Fig. 3) gehaltert, welche gleichzeitig als Bremse dient.

An einer Radgabel 108 sind über Gelenkbolzen 110 Bremsarme 112 befestigt. Diese Bremsarme 112 haben je eine Fixation 114 für den Träger 26 der Spuleneinheiten 24 bzw. der Bremsbacken 106. Die Betätigung der Bremsbacken 106, die Bremseinstellung, die Erhöhung des elektrischen Wirkungsgrades sowie der Feineinstellung wird durch Betätigung des mit den Bremsarmen 112 über ein Gelenk 114 verbundenen Gestänges 116 erreicht, welche ihrerseits über ein weiteres Gelenk 118 mit einer Einstelleinheit 120 verbunden sind.

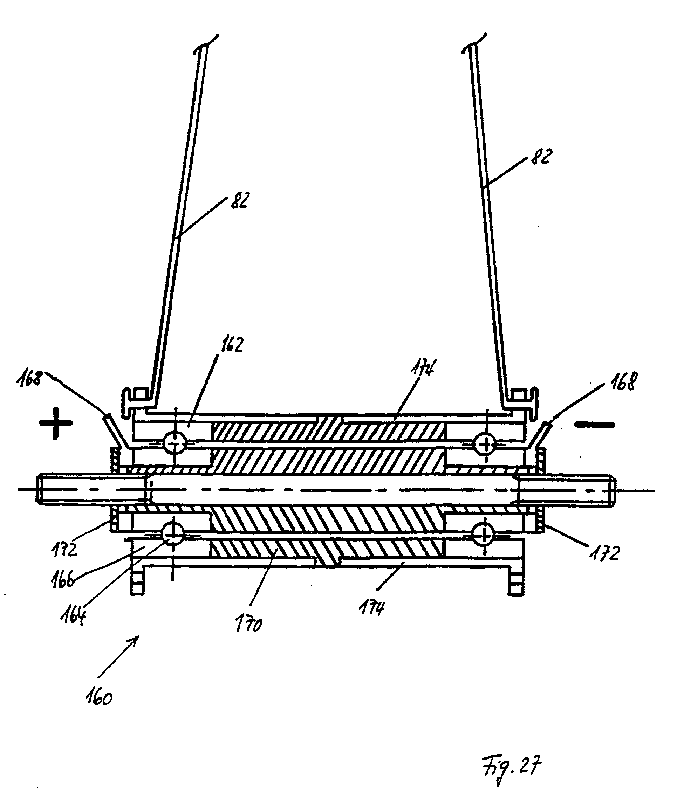

In Fig. 24 ist eine Variante eines an sich bekannten Bremssystems dargestellt, welches sehr häufig im Gebrauch ist. Die Bremsarme 112 sind ringförmig ausgebildet, die Funktion der beiden Bremssysteme gemäss Fig. 23 und 24 ist jedoch weitgehend gleich. Eine Einstelleinheit 120 und die beiden Bremsarme 112 sind von einem Drahtseil 122 durchgriffen, welches unterhalb des unteren Bremsarms 112 eine Befestigung 124 hat.

Eine in Fig. 25 gezeigte Teilansicht eines Bremssystems mit Grob- und Feineinstellung im Griffbereich ist wie üblich auf einer Lenkstange 126 eines Fahrrads über ein Bremsgriffsupport 128 im Bereich eines Handgriffs 130 befestigt. Ein schwenkbarer Bremsgriff 132 ist über einen Gelenkbolzen 134 am Bremsgriffsupport schwenkbar befestigt.

Ein Ein-/Ausschalthebel 136 mit einer auf den Bremsgriff 132 einwirkenden Exzenterfläche 138 ist um einen weiteren Gelenkbolzen 140 schwenkbar. Mit einer Feineinstellverzahnung 142 ist die Schwenkbewegung des Ein/Ausschalthebels 136 stufenweise einstellbar. Das System wird durch einen Einstellgleiter 144 ergänzt, welcher eine Kabelhalterung und/oder das Gegenstück der Feineinstellverzahnung 142 umfasst.

Durch Schwenken des Ein-/Ausschalthebels 136 in Richtung des Doppelpfeils A schwenkt die Exzenterfläche 138 den Bremsgriff 132 minim in Richtung des Doppelpfeils B, zum Handgriff 130 hin oder in einer anderen Stellung von diesem weg. Der Einstellgleiter 144 wird ebenfalls bewegt, linear in Richtung des Doppelpfeils C. Das auf die Bremsbacken 106 (Fig. 23 und 24) mit der Spuleneinheit 24 einwirkende Drahtseil 122 stellt die Distanz zwischen Spuleneinheit und Felge entsprechend fein ein, was unter anderem den elektrischen Wirkungsgrad der Stromerzeugungsvorrichtung beeinflusst.

Fig. 26 zeigt ein an sich bekanntes Rahmenrohr 146 eines Fahrrads mit einer Rahmenrohröffnung 148. Eine in Längsrichtung verschiebbare Hülse 150 dient als Abdeckung der Rahmenrohröffnung 148. In das Rahmenrohr 146 können mehrere Batterien 152 oder andere Energiespeicher eingeschoben werden. Dies erfolgt gegen den Widerstand von auf die Kontakte 154 (negativ) und 156 (positiv) einwirkenden Federn 158.

Eine in Fig. 27 dargestellte Nabe 160 eines Fahrrads mit Nabenlager 162 zeigt die Führung des elektrischen Stromes bei auf der Felge montierten Wickelspulen und Permanentmagneten in der Bremseinheit, was gegenüber den vorhergehenden Figuren eine inverse Lösung darstellt. Der elektrische Strom wird über die Speichen 82 zugeführt. Vom rotierenden Teil des Nabenlagers 162 fliesst der elektrische Strom über die Kugeln 164 zum Stator 166 des Nabenlagers und von dessen Kontakt 168 zum Verbraucher, beispielsweise zu einer Lampe oder einer Batterie.

Da der linken Seite der Nabe 160 die positive Phase des elektrischen Stromes zugeführt wird, der rechten Seite die negative Phase, muss ein Kurzschluss verhindert werden. Dies erfolgt durch eine elektrische Isolation 170 und wenigstens eine Isolationsscheibe 172, welche auf der Masseseite auch weggelassen werden kann. Das Nabengehäuse 174 ist durch die mechanisch feste Isolation 170 unterbrochen.

Mit dieser Ausgestaltung der Nabe können bisher notwendige Schleifringe oder dgl. weggelassen werden.

## Patentansprüche

1. Brems- und Stromerzeugungsvorrichtung für Fahrräder mit wenigstens einem Stromverbraucher, insbesondere einer Beleuchtung und/oder wenigstens einer Batterie, welche Stromerzeugungsvorrichtung eine mit Permanentmagneten (12,14) bestückte Felge (10) als Rotor und auf einem Träger seitlich der Felge (10) angeordnete elektrische Wickelspulen (30) als Stator umfasst, wobei die auf einer oder beiden Seiten entlang der ganzen Felge (10) wenigstens eines Rades angeordneten Permanentmagneten (12,14) der Felge (10) und die mit dem Krümmungsradius der Felge entsprechend längslaufend nahe nebeneinander angeordneten Wickelspulen (30) des Trägers bei entsprechender Stellung des Rotors dekkungsgleich angeordnet sind,
**dadurch gekennzeichnet, dass**
in einer kombinierten Vorrichtung eine auswechselbare Spuleneinheit (24) aus einer magnetisch gut leitenden Trägerplatte (28) mit wenigstens drei rechtwinklig abkragenden Wickelspulen (30) in eine Bremsbacke (106) der Bremsvorrichtung eingebaut ist, welche nach dem U-Kern-Prinzip nebeneinander angeordneten Wickelspulen (30) ein optimal wechselndes N-S/S-N Magnetfeld von jeder Spule zur/zu den Nachbarspule/n erzeugen, wobei die Spuleneinheit (24) auf der von der Trägerplatte (28) abgewandten Seite wenigstens teilweise mit einem mechanisch wirksamen Bremsbelag (36) versehen ist.

2. Vorrichtung nach Anspruch 1, **dadurch gekennzeichnet, dass** die Permanentmagneten (12,14) entlang der Felge (10) in Abstand angeordnet sind, und die Felge (10) zwischen den Permanentmagneten (12,14) eine magnetisch gut leitende Zwischenschicht (62) aufweist, insbesondere aus Weicheisen.

3. Vorrichtung nach Anspruch 2, **dadurch gekennzeichnet, dass** die Zwischenschicht (62) auf der von der Bremsfläche abgewandten Seite eine Einbuchtung (64) in radialer Richtung aufweist.

4. Vorrichtung nach einem der Ansprüche 1 bis 3, **dadurch gekennzeichnet, dass** auf der magnetischen gut leitenden Trägerplatte (28) Spulenkeme (34) angeordnet oder angeformt sind, welche ebenfalls magnetisch gut leitend sind.

5. Vorrichtung nach Anspruch 4, **dadurch gekennzeichnet, dass** die auswechselbare Trägerplatte (28) und die Spulenkerne (34) aus Weicheisen bestehen.

6. Vorrichtung nach einem der Ansprüche 1 bis 5, **dadurch gekennzeichnet, dass** die beiden äussersten Spulenkerne einer Trägerplatte (28) ohne Spulenwicklung sind, welche magnetisch leitenden Abschlusskerne (52) bei allen Wickelspulen (30) das U-Kern-Prinzip gewährleisten.

7. Vorrichtung nach einem der Ansprüche 1 bis 6, **dadurch gekennzeichnet, dass** der Bremsbelag (36) im Bereich der Wickelspule (30) bzw. des Spulenkerns (34) eine zentrale, magnetisch gut leitende Übertragungsplatte (38) aufweist.

8. Vorrichtung nach einem der Ansprüche 1 bis 7, **dadurch gekennzeichnet, dass** der Bremsbelag (36) der Spuleneinheit (24) mit einer auswechselbaren Verschleissschutzplatte (42,44) versehen ist, welche im Bereich der Spulenkerne (34) eine weitere magnetisch gut leitende Übertragungsplatte (38) aufweist.

9. Vorrichtung nach einem der Ansprüche 6 bis 8, **dadurch gekennzeichnet, dass** die Spulenkerne (34) und Abschlusskerne (52) gegenüber den Wikkelspulen in Axialrichtung (L) leicht erhöht angeordnet sind.

10. Vorrichtung nach einem der Ansprüche 1 bis 3 oder 6 bis 8, soweit diese nicht von Anspruch 4 oder 5 abhängig sind, **dadurch gekennzeichnet, dass** die auf der Trägerplatte (28) angeordneten Spulenkerne (34) aus magnetisch nicht leitendem Material bestehen, insbesondere aus Aluminium, Kunststoff, Holz, Glas oder Keramik.

11. Vorrichtung nach einem der Ansprüche 1 bis 9, **dadurch gekennzeichnet, dass** die seitlich aussenliegenden Permanentmagneten (12,14) in eine entsprechende, auch unterbrochene Vertiefung (92) der Felge (10) eingebracht, auf die Felge (10) auf-, oder in die Felge (10) hineingesteckt sind.

12. Vorrichtung nach einem der Ansprüche 1 bis 10, **dadurch gekennzeichnet, dass** die Felge (10) im Innenbereich als Hohlkammer (96) ausgebildet ist, in dessen seitlichem Innenbereich je ein Band von Permanentmagneten (12,14) eingezogen, verhakt oder durch ein ebenfalls eingezogenes Kunststoffprofil (102) und/oder eine Ausschäumung (104) seitlich angedrückt ist.

13. Vorrichtung nach einem der Ansprüche 1 und 5 bis 11, **dadurch gekennzeichnet, dass** alle Permanentmagneten (12,14) der Felge (10) gleich polarisiert und mit dazwischenliegendem, nicht magnetisch leitendem Material (66) in Abstand (d) getrennt sind, und die Spuleneinheit (24) in gleichem Abstand Wickelspulen (30) hat.

14. Brems- und Stromerzeugungsvorrichtung für Fahrräder mit wenigstens einem Stromverbraucher, insbesondere einer Beleuchtung und/oder wenigstens einer Batterie, welche Stromerzeugungsvorrichtung eine mit Wickelspulen (30) bestückte Felge (10) als Rotor und auf einem nicht magnetischen Träger seitlich der Felge angeordnete Permanentmagneten (12,14) als Stator umfasst, wobei die auf einer oder beiden Seiten entlang der ganzen Felge (10) wenigstens eines Rades angeordneten Wickelspulen (30) der Felge (10) und die mit dem Krümmungsradius der Felge entsprechend längslaufend nahe nebeneinander angeordneten Permanentmagneten (12,14) des Trägers bei entsprechender Stellung des Rotors deckungsgleich angeordnet sind,
**dadurch gekennzeichnet, dass**
in einer kombinierten Vorrichtung die Wickelspulen (30) nahe nebeneinander liegend auf einer magnetisch gut leitenden Trägerplatte (28) angeordnet sind und eine auswechselbare Permanentmagneteneinheit in eine Bremsbacke (106) der Bremsvorrichtung eingebaut ist, welche nach dem U-Kern-Prinzip nebeneinander angeordneten Wickelspulen (30) ein optimal wechselndes N-S/S-N Magnetfeld von jeder Spule zur/zu den Nachbarspule/n erzeugen, wobei die Permanentmagneteneinheit wenigstens teilweise mit einem mechanisch wirksamen Bremsbelag (36) versehen ist.

## Claims

1. Braking and power generating device for bicycles, comprising at least one power load, in particular a light and/or at least one battery, which power generating device comprises a rim (10) fitted with permanent magnets (12,14), as a rotor, and comprises electric coils (30) arranged on a carrier to the side of the rim (10), as a stator, wherein the permanent magnets (12,14) of the rim (10), which are arranged on one or both sides along the entire rim (10) of at least one wheel, and the coils (30) of the carrier which are arranged close to one another longitudinally, corresponding to the radius of curvature of the rim, with a corresponding position of the rotor, are arranged congruently,
**characterised in that**,
in a combined device, a replaceable coil unit (24) made of a carrier plate (28) which is a good magnetic conductor, with at least three coils (30), protruding at right angles, is installed in a brake shoe (106) of the braking device, which according to the U-core principle of coils (30) arranged next to one another, generate an optimally changing N-S/S-N magnetic field from each coil to the neighbouring coil(s), wherein the coil unit (24) on the side remote from the carrier plate (28) is provided at least partially with a mechanically effective brake lining (36).

2. Device according to claim 1, **characterised in that** the permanent magnets (12, 14) are arranged spaced along the rim (10), and the rim (10) between the permanent magnets (12, 14) has an intermediate layer (62) which is a good magnetic conductor, made in particular of soft iron.

3. Device according to claim 2, **characterised in that** on the side remote from the braking face, the intermediate layer (62) has a notch (64) in the radial direction.

4. Device according to any one of claims 1 to 3, **characterised in that** arranged or formed on the carrier plate (28), which is a good magnetic conductor, are coil cores (34), which are also good magnetic conductors.

5. Device according to claim 4, **characterised in that** the replaceable carrier plate (28), and the coil cores (34) are made of a soft iron.

6. Device according to any one of claims 1 to 5, **characterised in that** the two outermost coil cores of a carrier plate (28) are without coil windings, which magnetically conductive end cores (52) ensure the U-core principle in all the coils (30).

7. Device according to any one of claims 1 to 6, **characterised in that** the brake lining (36) in the region of the coil (30), or the coil core (34) has a central transmission plate (38) which is a good magnetic conductor.

8. Device according to any one of claims 1 to 7, **characterised in that** the brake lining (36) of the coil unit (24) is provided with a replaceable wear protection plate (42, 44) which in the region of the coil cores (34) has a further transmission plate (38) which is a good magnetic conductor.

9. Device according to any one of claims 6 to 8, **characterised in that** all the coil cores (34) and end cores (52) are arranged slightly elevated in the axial direction (L) relative to the winding cores.

10. Device according to any one of claims of 1 to 3 or 6 to 8, if these are not dependent on claim 4 or 5, **characterised in that** the coil cores (34) which are arranged on the carrier plate (28) consist of material, which is not magnetically conductive, being in particular of aluminium, plastics material, wood, glass or ceramic.

11. Device according to any one of claims that 1 to 9, **characterised in that** the laterally outermost permanent magnets (12, 14) are introduced into a corresponding recess (92) of the rim (10) which is also interrupted, and are inserted onto the rim (10) or into the rim (10).

12. Device according to any one of claims 1 to 10, **characterised in that** the rim (10) is formed in the inner region as a hollow chamber (96), in the lateral inner region of which a respective band of permanent magnets (12, 14) is drawn in, hooked in, or is laterally pressed on by a plastic profile (102) which has also been drawn in, and/or by foaming (104).

13. Device according to any one of claims 1 and 5 to 11, **characterised in that** all the permanent magnets (12, 14) of the rim (10) are identically polarised and are separated at a spacing (d) with material (66) situated between them which is not magnetically conductive, and the coil unit (24) has coils (30) at the same spacing.

14. Braking and power generating device for bicycles, with at least one power load, in particular a light and/or at least one battery, which power generating device comprises a rim (10) fitted with coils (30) as a rotor, and permanent magnets (12, 14) arranged on a nonmagnetic carrier to the side of the rim, as a stator, wherein the coils (30) of the rim (10), which are arranged on one or both sides along the entire rim (10) of at least one wheel, and the permanent magnets (12, 14) of the carrier which are arranged close to one another longitudinally, corresponding to the radius of curvature of the rim, with a corresponding position of the rotor, are arranged congruently,
**characterised in that**,
in a combined device, the coils (30) are arranged close to one another on a carrier plate (28) which is a good magnetic conductor, and a replaceable permanent magnet unit is installed in a brake shoe (106) of the braking device, which according to the U-core principle of coils (30) arranged next to one another generate an optimal ly changing N-S/S-N magnetic field from each coil to the neighbouring coil(s), the permanent magnet unit being provided at least partially with a mechanically effective brake lining (36).

## Revendications

1. Dispositif de freinage et de génération de courant pour bicyclettes associé à au moins un consommateur de courant, en particulier un éclairage et/ou au moins une batterie, ce dispositif de génération de courant incluant au moins comme rotor une jante (10) équipée d'aimants permanents (12, 14) et comme stator des bobines électriques d'enroulement (30) agencées latéralement par rapport à la jante (10) sur un support, les aimants permanents (12, 14) de la jante (10) agencés sur l'un et/ou l'autre des côtés le long de toute la jante (10) d'au moins une roue et les bobines d'enroulement (30) du support agencées presque l'une à côté de l'autre en direction longitudinale d'une façon correspondante au rayon de courbure de la jante étant agencés de manière à coïncider dans une position correspondante du rotor;
**caractérisé en ce que**,
dans un dispositif combiné, une unité interchangeable (24) de bobines consistant en une plaque porteuse (28) magnétiquement bonne conductrice qui porte au moins trois bobines d'enroulement (30) en saillie à angles droits est montée dans une mâchoire (106) de frein du dispositif de freinage, les bobines d'enroulement (30) agencées l'une à côté de l'autre selon le principe de noyau en U engendrant à partir de chaque bobine un champ magnétique alternatif N-S/S-N optimal vers la ou les bobine(s) voisine(s), l'unité (24) de bobines comportant au moins sur une partie du côté opposé à la plaque porteuse (28) une garniture (36) de frein à effet mécanique.

2. Dispositif selon la revendication 1 **caractérisé en ce que** les aimants permanents (12, 14) sont agencés espacés le long de la jante (10) et la jante (10) comporte une couche intermédiaire magnétiquement bonne conductrice (62), en particulier en fer doux, entre les aimants permanents (12, 14).

3. Dispositif selon la revendication 2 **caractérisé en ce que** la couche intermédiaire (62) comporte une cavité (64) en direction radiale sur le côté opposé à la surface de freinage.

4. Dispositif selon l'une quelconque des revendications précédentes **caractérisé en ce que** des noyaux (34) de bobines, qui sont eux aussi magnétiquement bons conducteurs, sont agencés ou conformés sur la plaque porteuse magnétiquement bonne conductrice (28).

5. Dispositif selon la revendication 4 **caractérisé en ce que** la plaque porteuse interchangeable (28) et les noyaux (34) de bobines sont en fer doux.

6. Dispositif selon l'une quelconque des revendications précédentes **caractérisé en ce que** les deux noyaux de bobines les plus externes d'une plaque porteuse (28) ne comportent aucun enroulement de bobine, ces noyaux d'extrémités (52) magnétiquement conducteurs garantissant le principe du noyau en U dans toutes les bobines d'enroulement (30).

7. Dispositif selon l'une quelconque des revendications précédentes **caractérisé en ce que** la garniture (36) de frein comporte une plaque de transmission centrale magnétiquement bonne conductrice (38) dans la zone de la bobine d'enroulement (30) ou du noyau (34) de bobine.

8. Dispositif selon l'une quelconque des revendications précédentes **caractérisé en ce que** la garniture (36) de frein de l'unité (24) de bobines est pourvue d'une plaque de protection (42, 44) contre l'usure qui comporte une autre plaque de transmission magnétiquement bonne conductrice (38) dans la zone des noyaux (34) de bobines.

9. Dispositif selon l'une quelconque des revendications 6 à 8 **caractérisé en ce que** les noyaux (34) de bobines et les noyaux (52) d'extrémités sont agencés en légère surélévation en direction axiale (L) par rapport aux bobines d'enroulements.

10. Dispositif selon l'une quelconque des revendications 1 à 3 ou 6 à 8 dans la mesure où celles-ci ne dépendent pas de la revendication 4 ou 5 **caractérisé en ce que** les noyaux (34) de bobines agencés sur la plaque porteuse (28) sont en matière magnétiquement non-conductrice, en particulier en aluminium, en matière plastique, en bois, en verre ou en céramique.

11. Dispositif selon l'une quelconque des revendications 1 à 9 **caractérisé en ce que** les aimants permanents (12, 14) disposés à l'extérieur sont montés dans un évidement, éventuellement interrompu, (92) de la jante (10), ou sont enfoncés sur la jante (10) ou dans la jante (10).

12. Dispositif selon l'une quelconque des revendications 1 à 10 **caractérisé en ce que** la jante (10) est, dans la zone interne, en forme de chambre creuse (96) qui porte dans chaque côté de sa zone interne une bande d'aimants permanents (12, 14) qui y sont insérés ou accrochés, ou y sont appuyés latéralement au moyen d'un profilé lui aussi inséré (102) en matière plastique et/ou d'une éjection de mousse (104).

13. Dispositif selon l'une quelconque des revendications 1 et 5 à 11 **caractérisé en ce que** tous les aimants permanents (12, 14) de la jante (10) sont de même polarité et sont espacés d'une distance mutuelle (d) par une matière magnétiquement non-conductrice (66), et l'unité (24) de bobines comprend des bobines d'enroulement (30) espacées de la même distance:

14. Dispositif de freinage et de génération de courant pour bicyclettes associé à au moins un consommateur de courant, en particulier un éclairage et/ou au moins une batterie, ce dispositif de génération de courant incluant au moins comme rotor une jante (10) équipée de bobines d'enroulement (30) et comme stator des aimants permanents (12, 14) agencés latéralement par rapport à la jante (10) sur un support non magnétique, les bobines d'enroulement (30) de la jante (10) agencées sur l'un et/ou l'autre côtés le long de toute la jante d'au moins une roue et les aimants permanents (12, 14) du support agencés presque l'un à côté de l'autre en direction longitudinale d'une façon correspondante au rayon de courbure de la jante étant agencés de manière à coïncider dans une position correspondante du rotor;
**caractérisé en ce que**,
dans un dispositif combiné, les bobines d'enroulement (30) sont agencées presque l'une à côté de l'autre sur une plaque porteuse (28) et une unité interchangeable d'aimants permanents est montée dans une mâchoire (106) de frein du dispositif de freinage, ces bobines d'enroulement (30) agencées l'une à côté de l'autre selon le principe de noyau en U engendrant à partir de chaque bobine un champ magnétique alternatif N-S/S-N optimal vers la ou les bobine(s) voisine(s), l'unité d'aimants permanents comportant au moins en partie une garniture (36) de frein à effet mécanique.
